# FASCICULE DE BREVET EUROPEEN

(11) **EP 1 697 693 B1**
(45) Date de publication et mention de la délivrance du brevet: **08.09.2010**
(21) Numéro de dépôt: 04805645.1
(22) Date de dépôt: 06.12.2004
(51) Int. Cl.: G01B 5/255

(54) **DISPOSITIF PERMETTANT DE CONTROLER UN BANC DESTINE A MESURER, REGLER ET/OU CONTROLER UN TRAIN ROULANT DE VEHICLULE AUTOMOBILE**
EINRICHTUNG ZUR STEUERUNG EINER WERKBANK ZUM MESSEN, EINSTELLEN UND/ODER STEUERN EINES CHASSIS EINES KRAFTFAHRZEUGS
DEVICE FOR CONTROLLING A BENCH USED TO MEASURE, ADJUST AND/OR CONTROL A CHASSIS OF A MOTOR VEHICLE

(30) Priorité: 26.12.2003 FR 0315471
(43) Date de publication de la demande: 06.09.2006
(73) Titulaire: Peugeot Citroën Automobiles S.A., 78140 Vélizy Villacoublay (FR)
(72) Inventeur: ROUQUIE, Philippe, F-91710 Vert-le-Petit (FR); GUIGNE, Fabrice, F-91470 Les Molieres (FR)
(86) Numéro de dépôt international: PCT/FR2004/003128
(87) Numéro de publication internationale: WO 2005/071352

(56) Documents cités:
- EP-A- 0 310 520
- EP-A- 0 593 067
- EP-A- 0 994 329
- FR-A- 2 727 199
- US-A- 5 598 358
- US-B1- 6 427 346

## Description

La présente invention concerne un dispositif permettant de contrôler un banc destiné à mesurer, régler et/ou contrôler un train roulant de véhicule automobile.

Les bancs sont largement utilisés pour assurer le réglage et le contrôle des liaisons au sol d'un véhicule monté sur le banc.

Cependant, les mesures fournies par chaque banc de réglage ou de contrôle peuvent être faussées par le banc lui-même suite à des dérives des instruments de mesure montés sur le banc ou à cause également de défauts de géométrie inhérents aux trains roulants de certains véhicules.

Un dispositif pour contrôler/régler les instruments de mesure dans un banc de mesure pour un train roulant de véhicule automobile est décrit dans US5598358.

La présente invention a pour but d'éliminer les inconvénients ci-dessus en proposant un dispositif permettant de contrôler un banc destiné à mesurer, régler et/ou contrôler un train roulant de véhicule automobile et qui est **caractérisé en ce qu**'il comprend un châssis rigide constitué essentiellement de deux longerons et de traverses solidaires des longerons et équipé de roues avant et arrière pouvant chacune pivoter autour d'un axe perpendiculaire au châssis par des moyens de liaison manoeuvrables manuellement à une position angulaire déterminée, des instruments de métrologie fixés au châssis rigide à des emplacements déterminés pour mesurer une position angulaire déterminée de référence de chaque roue du châssis, l'ensemble constitué par le châssis et les roues étant monté sur le banc qui comprend au moins un instrument de mesure de la position angulaire d'une roue du châssis, le dispositif comprenant en outre un circuit électronique apte à comparer une valeur de position angulaire déterminée de référence d'une roue mesurée préalablement par au moins l'un des instruments métrologiques à la valeur de position angulaire de cette roue mesurée par l'instrument de mesure du banc de manière à évaluer la précision de mesure de chaque instrument de mesure du banc.

Chaque roue du châssis est montée sur une jante dont le rebord latéral annulaire est dressé par usinage sur sa face extérieure et sert de lieu de visée à l'instrument de mesure du banc.

La jante sur laquelle est montée la roue du châssis peut être alésée en son centre de manière à présenter une paroi de fond dressée servant également de lieu de visée à l'instrument de mesure du banc.

Les moyens de liaison permettant le pivotement de chaque roue du châssis comprennent deux barres sensiblement parallèles et transversales à l'un correspondant des longerons du châssis et un bras de pivotement du support de la roue, les deux barres ayant leurs extrémités situées d'un même côté reliées de manière articulée au bras de pivotement en deux emplacements distincts, l'une des barres ayant son extrémité opposée à celle articulée au bras de pivotement pouvant être fixée au châssis par un moyen de blocage libérable lors de l'opération de réglage du pivotement de la roue à une valeur déterminée et l'autre barre comportant à son extrémité opposée à celle articulée au voisinage de l'extrémité libre du bras de pivotement un volant de manoeuvre exerçant à cette extrémité libre un effort de poussée ou de traction suivant le sens de rotation du volant pour pivoter le support de roue à une position angulaire déterminée de référence de la roue lorsque le moyen de blocage est libéré.

La barre précitée est bloquée au châssis par une vis traversant un trou oblong réalisé le long d'une partie d'extrémité de cette barre et l'autre barre comprend une partie filetée montée à rotation relativement au châssis en ayant son extrémité libre solidaire du volant de manoeuvre et sa partie d'extrémité opposée engagée dans un perçage taraudé de la partie restante de la barre.

Avantageusement, chaque instrument de métrologie du châssis est un capteur à palpeur en contact avec le bras de pivotement correspondant de la roue du châssis ou avec l'une des deux barres parallèles de commande du bras de pivotement.

Le dispositif comprend en outre au moins une plaque montée sur le châssis en étant manoeuvrable manuellement de manière à être déplacée à une hauteur déterminée relativement au châssis correspondant à la position d'un berceau de véhicule à contrôler par le banc et au moins l'un des instruments de métrologie du châssis permet de mesurer une valeur de position déterminée de référence d'un emplacement caractéristique de la plaque reproduisant le berceau et qui est comparée dans le circuit électronique à une valeur mesurée par l'instrument de mesure du banc de la position de cette plaque au même emplacement de mesure de l'instrument de métrologie du châssis.

La plaque est déplaçable, en étant guidée relativement au châssis, par une vis montée à rotation sur le châssis perpendiculairement à ce dernier et manoeuvrable par un volant solidaire de la partie supérieure de la vis.

Les roues du châssis sont montées à rotation sur leurs supports respectifs par des roulements sans jeu et l'axe de pivotement vertical de chaque roue est également monté sur le châssis par des roulements sans jeu.

Les roues sont montées articulées au châssis par des liaisons permettant de reproduire les différents angles de pince, d'ouverture, de carrossage et de contre-carrossage que peuvent prendre les roues d'un train de véhicule.

La jante est usinée avec le pneumatique de la roue monté sur la jante.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un banc de mesure de la géométrie d'un train roulant de véhicule automobile et sur lequel est monté le dispositif de l'invention permettant de contrôler ce banc ;
- la figure 2 est une vue partielle en perspective de dessus du dispositif de contrôle du banc de la figure 1 ;

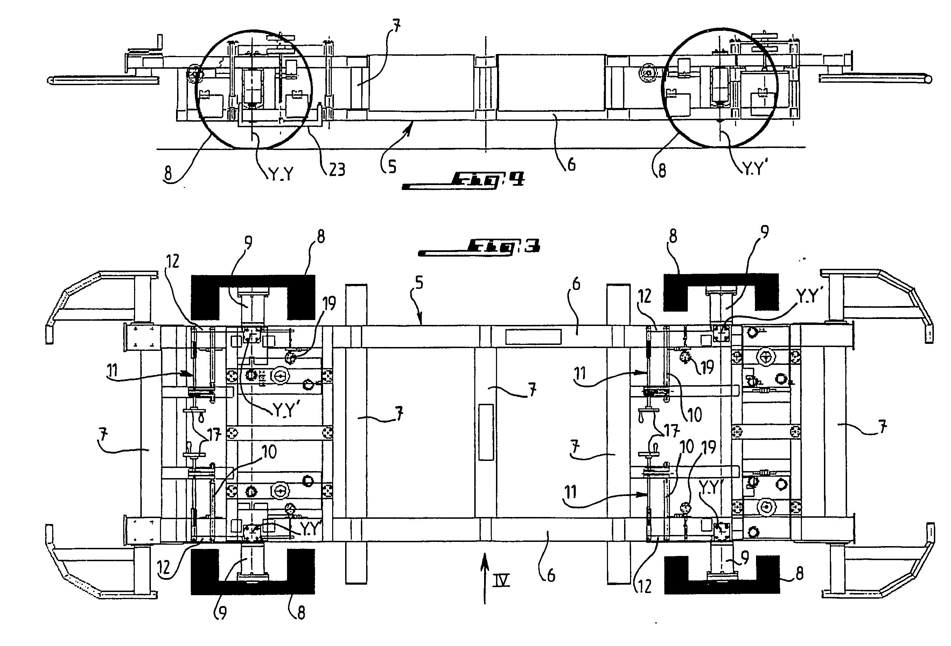

- la figure 3 est une vue de dessus suivant la flèche III de la figure 1 ;
- la figure 4 est une vue de côté suivant la flèche IV de la figure 3 ;
- la figure 5 est une vue partielle agrandie de dessus du dispositif de contrôle de l'invention ; et
- la figure 6 est une vue en coupe d'une jante de roue du dispositif de contrôle de l'invention.

En se reportant aux figures, la référence 1 désigne un banc, connu en soi, permettant de mesurer, régler et/ou contrôler la géométrie, plus particulièrement des liaisons au sol, des véhicules automobiles qui sont successivement montés sur le banc 1.

Le banc 1 comprend essentiellement un cadre de support 2 fixé au sol et un certain nombre d'instruments de mesure 3, dont deux seulement sont représentés, par exemple du type télémètre, permettant de mesurer la géométrie de trains roulants de véhicules automobiles, notamment de chacune des roues d'un véhicule. Les informations de mesure des instruments 3 sont transmises à un circuit électronique, non représenté, pouvant être constitué par un poste central de contrôle, qui enregistre et/ou affiche les différentes valeurs de géométrie des roues du véhicule mesurées par les instruments 3.

Le banc 1 comprend également des rouleaux menants 4 d'entraînement des roues avant et arrière d'un train de véhicule automobile afin de mesurer le comportement géométrique du train au roulage du véhicule.

Selon l'invention, le dispositif permettant de contrôler ou vérifier le banc 1 avant qu'il soit utilisé pour mesurer la géométrie de trains roulants de véhicules automobiles, comprend un châssis rigide 5, non déformable, comprenant d'une manière générale deux longerons parallèles 6 reliés l'un à l'autre par un certain nombre de traverses 7.

Le châssis 5 est également équipé de quatre roues 8 montées sur le châssis 5 de manière à reproduire la position des roues d'un véhicule automobile.

Chaque roue 8 est montée sur un support de roue 9 fixé au longeron correspondant 6 du châssis rigide 5 de manière à permettre son pivotement autour d'un axe YY' perpendiculaire au plan du châssis 5 contenant les longerons 6. Des moyens de liaison, manoeuvrables manuellement, sont prévus sur le châssis 5 pour régler chaque roue 8 à plusieurs positions angulaires successives relativement au châssis 5 et qui serviront de références pour vérifier et/ou contrôler le banc 1.

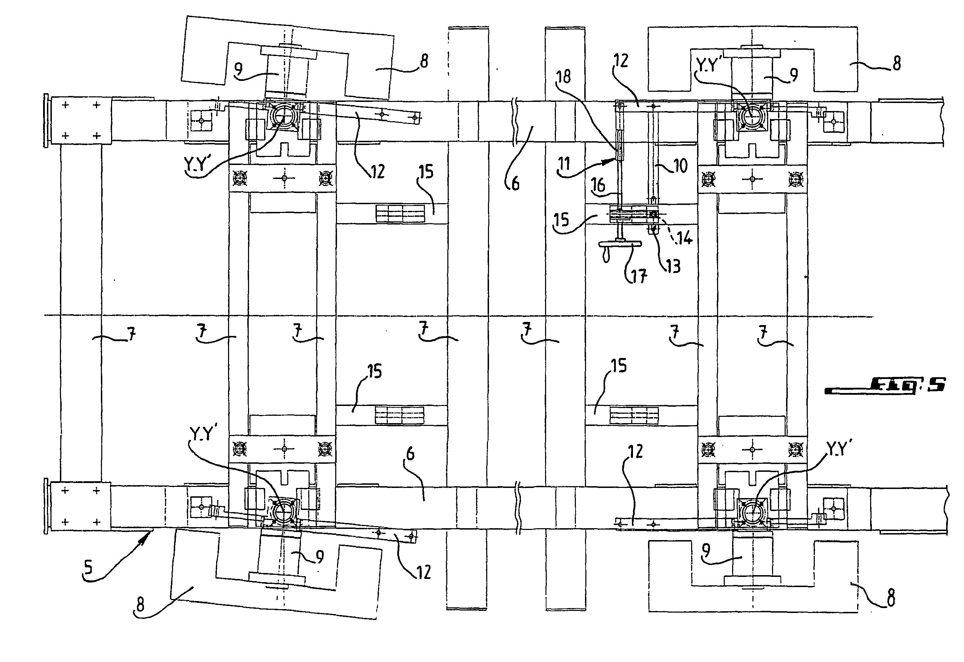

Ces moyens de liaison comprennent, pour chaque roue 8, comme cela est mieux visible en figure 5, deux barres sensiblement parallèles 10, 11, s'étendant sensiblement transversalement à un longeron correspondant 6 du châssis 5 et qui sont reliées articulées, par deux de leurs extrémités situées d'un même côté, à un bras 12 relié au support de roue 9 de manière à permettre son pivotement autour de l'axe YY'.

La barre 10 comporte le long de sa partie d'extrémité opposée à celle articulée au bras 12 une lumière oblongue 13 traversée par une vis 14 ancrée sous un petit longeron 15 fixé entre deux traverses 7 du châssis 5. La vis 14 peut être desserrée pour permettre le réglage d'une position angulaire déterminée de la roue correspondante 8 par les moyens de liaison 10-12 et à nouveau serrée pour bloquer le support de roue 9 à cette position.

La barre 11 comprend une tige filetée 16 pouvant tourner dans un trou taraudé solidaire du petit longeron 15 en manoeuvrant un volant 17 fixé à l'extrémité de la tige filetée opposée au bras 12. La tige filetée 16 est engagée dans un perçage taraudé de la partie restante 18 de la barre 11 articulée au voisinage de l'extrémité libre du bras de pivotement 12.

En déplaçant le volant de manoeuvre 17 dans un sens ou dans l'autre, après avoir desserré la vis de blocage 14, la barre 11 exerce à l'extrémité libre du bras 12 un effort de poussée ou de traction sur cette barre de manière à faire pivoter le support de roue 9 et, ainsi, à régler la position angulaire de la roue 8 à une valeur déterminée.

Le châssis rigide 5 est également équipé d'un certain nombre d'instruments de métrologie 19 pouvant être par exemple constitué chacun par un capteur à palpeur du genre comparateur à cadran d'affichage de valeur d'angle et aiguille de pointage mobile sous l'action du palpeur. Dans ce cas, chaque capteur 19 est fixé au châssis 5 de manière que son palpeur contacte un élément représentatif de la valeur angulaire que peut prendre la roue correspondante 8 et qui peut être constitué par exemple par la barre 10 ou le bras de pivotement 12.

Bien que cela ne soit pas représenté aux figures, les roues 8 sont montées articulées au châssis rigide 5 par des liaisons permettant de reproduire les différents angles de pince, d'ouverture, de carrossage et de contre-carrossage que peuvent prendre les roues d'un train de véhicule automobile, c'est-à-dire de reproduire toutes les diversités d'une liaison au sol de véhicule.

Les roues 8 du châssis 5 sont montées à rotation sur leurs supports respectifs 9 par des roulements sans jeu et l'axe de pivotement vertical YY' de chaque support de roue 9 est également monté sur le châssis 5 par des roulements sans jeu, de manière à obtenir une bonne rigidité d'ensemble avec le châssis 5 et à permettre à la roue 8 de tourner parfaitement dans son plan.

En outre, le châssis rigide 5 est lui-même contrôlé métrologiquement à la fabrication pour éviter certains défauts, par exemple de voilage de celui-ci.

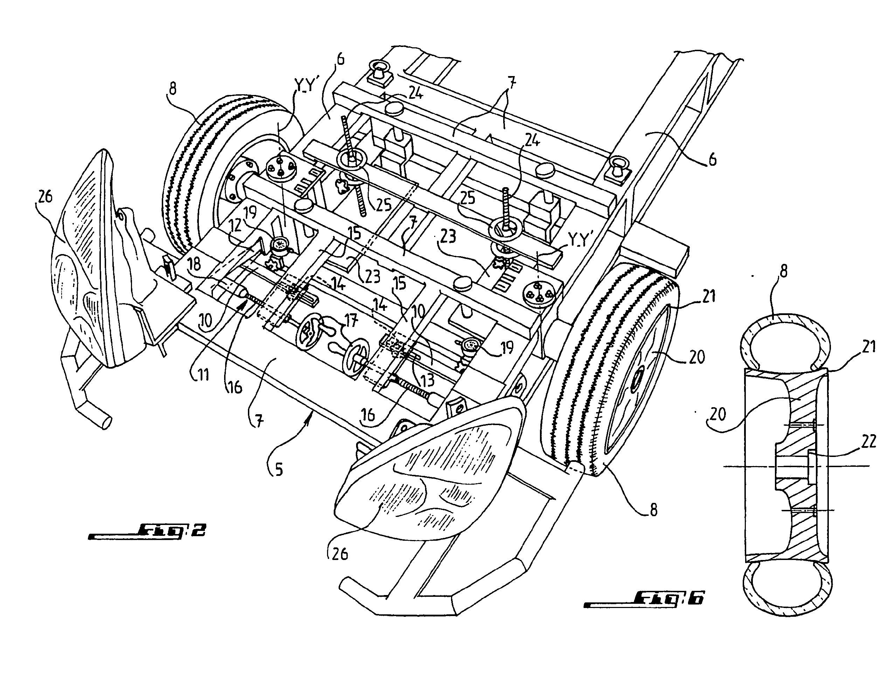

Chaque roue 8 est montée sur une jante métallique 20 visible en figure 6 dont le rebord latéral annulaire 21 de maintien latéral du pneumatique monté sur la jante 20 est dressé par usinage sur sa face extérieure et sert de lieu de visée à l'instrument de mesure correspondant 3 du banc 1. En outre, la jante 20 peut être alésée en son centre de manière à présenter une paroi de fond 22 dressée par usinage pouvant également servir de lieu de visée à l'instrument de mesure 3 du banc 1.

De préférence, l'usinage ci-dessus de la jante est effectué avec le pneumatique monté sur celle-ci pour éviter de voiler la jante si l'on devait monter le pneumatique sur celle-ci après l'avoir usinée, ce qui évite par conséquent de fausser les mesures qui seront décrites ci-dessous. Une fois cet usinage effectué, l'ensemble jante et pneumatique peut être contrôlé métrologiquement pour vérifier si la jante n'est pas voilée.

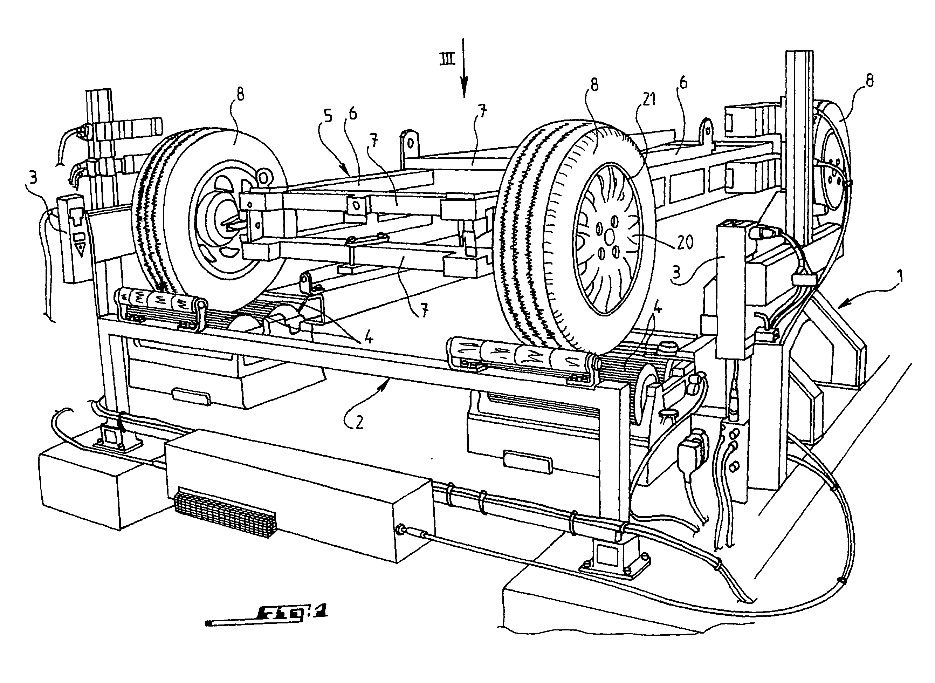

Pour vérifier ou contrôler le banc 1, le châssis rigide roulant 5 est tout d'abord déposé sur le banc 1 comme représenté en figure 1 de la même manière qu'un train roulant de véhicule automobile. Ensuite, un opérateur manoeuvre le volant 17 associé par exemple à l'une des roues avant 8, après avoir desserré la vis de blocage 14 de la barre 10, dans un sens permettant de pivoter le support de roue 9 autour de l'axe vertical de pivotement YY' à une position angulaire déterminée de la roue 8 et dont la valeur est précisément contrôlée par l'instrument de métrologie associé 19 du châssis 5. Une fois la roue amenée à sa position angulaire déterminée, la vis 14 est à nouveau serrée pour bloquer la barre 10 et donc la roue 8 à cette position angulaire déterminée. L'opérateur commande ensuite l'instrument de mesure 3 de manière qu'il vise un point caractéristique de la position géométrique de la roue 8, par exemple un emplacement situé sur le rebord latéral annulaire 21 de la jante 20 ou la paroi de fond 22 de cette jante. Le poste de contrôle associé au banc 1 reçoit alors l'information de mesure transmise par l'instrument de mesure 3 et la compare à la valeur de référence de position angulaire de la roue 8 de l'instrument métrologique 19, cette dernière ayant été auparavant transmise par l'opérateur au poste de contrôle et mémorisée dans celui-ci. Le résultat de cette comparaison permet de vérifier si la valeur mesurée par l'instrument de mesure 3 du banc 1 s'écarte ou non de celle de référence de l'instrument métrologique 19. Ces opérations de contrôle du banc 1 peuvent être effectuées sur chacune des roues du châssis 5 et à plusieurs autres valeurs de pivotement de référence déterminées par l'opérateur à l'aide des volants de manoeuvre 17 et des instruments de métrologie 19. Ainsi, par la connaissance préalable de la géométrie du train roulant d'un véhicule, celle-ci est reproduite exactement par le châssis roulant rigide 5 disposé sur le banc 1 pour permettre d'effectuer la comparaison entre la valeur de référence de position de chaque roue du châssis 5 et les valeurs données par le banc 1. Cette comparaison permet d'évaluer les capacités et aptitudes du banc 1 à mesurer, régler et/ou contrôler un train roulant de véhicule.

Comme cela ressort de la figure 2, le châssis 5 est en outre équipé d'au moins une plaque 23, dans le cas présent au nombre de deux, montées sur le châssis 5 de manière à pouvoir être déplacée à une hauteur déterminée relativement au châssis 5 sous celui-ci pour correspondre à la position d'un berceau d'un véhicule automobile à contrôler par le banc 1. A cet effet, chaque plaque 23 est déplaçable suivant une direction perpendiculaire au plan du châssis 5 par une tige filetée 24 traversant un trou taraudé de l'une des traverses 7 du châssis 5 perpendiculairement à celle-ci et munie d'un volant de manoeuvre 25 à sa partie supérieure située au-dessus de la traverse 7, l'extrémité inférieure de la tige filetée étant solidaire de la plaque 23 qui est guidée dans son mouvement ascendant ou descendant par des moyens de guidage appropriés solidaires du châssis 5. De la sorte, l'opérateur peut régler la position de chaque plaque 23 relativement au châssis 5 à une valeur correspondant à la position d'un berceau particulier d'un véhicule et au moins l'un des instruments de métrologie 19 du châssis 5 peut mesurer cette valeur de position déterminée de référence d'un emplacement caractéristique de la plaque 23, cette valeur pouvant alors être comparée dans le poste de contrôle associé au banc 1 à une valeur mesurée par au moins l'un des instruments de mesure 3 du banc 1 de la position de cette plaque 23 au même emplacement caractéristique de mesure de l'instrument de métrologie 19 du châssis 5. Cette comparaison permet de vérifier si les instruments de mesure 3 du banc 1 fournissent ou non une valeur acceptable par rapport à la valeur de référence déterminée des instruments de métrologie pour assurer un contrôle précis des berceaux de véhicules par le banc 1.

Le châssis 5 de l'invention peut être utilisé également pour contrôler d'autres éléments d'un véhicule, tels que par exemple les phares avant de celui-ci.

Ainsi, comme représenté plus particulièrement en figure 2, le châssis 5 est équipé de deux phares avant 26 positionnés et fixés précisément au châssis 5 par des moyens de réglage de fixation appropriés pour contrôler ou vérifier si le régloscope, appareil qui vérifie si chaque phare est bien orienté, est bien réglé.

Le dispositif de l'invention ci-dessus décrit peut être utilisé périodiquement, par exemple tous les jours, pour vérifier que le banc délivrera une mesure métrologique quasiment parfaite de la géométrie des trains roulants de véhicules automobiles. Le dispositif de l'invention permet de s'affranchir des dérives de mesure dans le temps des instruments de mesure du banc de contrôle de trains roulants des véhicules.

## Revendications

1. Dispositif permettant de contrôler un banc (1) destiné à mesurer, régler et/ou contrôler un train roulant de véhicule automobile, **caractérisé en ce qu'**il comprend un châssis rigide (5) constitué essentiellement de deux longerons (6) et de traverses (7) solidaires des longerons (6) et équipé de roues avant et arrière (8) pouvant chacune pivoter autour d'un axe (YY') perpendiculaire au châssis (5) par des moyens de liaison manoeuvrables manuellement à une position angulaire déterminée, des instruments de métrologie (19) fixés au châssis rigide (5) à des emplacements déterminés pour mesurer une position angulaire déterminée de référence de chaque roue (8) du châssis (5), l'ensemble constitué par le châssis (5) et les roues étant monté sur le banc (1) qui comprend au moins un instrument de mesure (3) de la position angulaire d'une roue (8) du châssis (5), et **en ce qu'**il comprend un circuit électronique apte à comparer une valeur de position angulaire déterminée de référence d'une roue (8) mesurée préalablement par au moins l'un des instruments métrologiques (19) à la valeur de position angulaire de cette roue (8) mesurée par l'instrument de mesure (3) du banc (1) de manière à évaluer la précision de mesure de chaque instrument de mesure (3) du banc (1).

2. Dispositif selon la revendication 1, **caractérisé en ce que** chaque roue (8) du châssis (5) est montée sur une jante (20) dont le rebord latéral annulaire (21) est dressé par usinage sur sa face extérieure et sert de lieu de visée à l'instrument de mesure (3) du banc (1).

3. Dispositif selon la revendication 1 ou 2, **caractérisé en ce que** chaque roue (8) du châssis (5) est montée sur une jante (20) alésée en son centre de manière à présenter une paroi de fond (22) dressée par usinage servant de lieu de visée à l'instrument de mesure (3) du banc (1).

4. Dispositif selon l'une des revendications précédentes, **caractérisé en ce que** les moyens de liaison permettant le pivotement de chaque roue (8) du châssis (5) comprennent deux barres (10, 11) sensiblement parallèles et transversales à l'un correspondant des longerons (6) du châssis (5) et un bras (12) de pivotement du support (9) de la roue (8), les deux barres (10, 11) ayant leurs extrémités situées d'un même côté reliées de manière articulée au bras de pivotement (12) en deux emplacements distincts, l'une (10) des barres ayant son extrémité opposée à celle articulée au bras de pivotement (12) pouvant être fixée au châssis (5) par un moyen de blocage (14) libérable lors de l'opération de réglage du pivotement de la roue (8) à une valeur déterminée et l'autre barre (11) comportant à son extrémité opposée à celle articulée au voisinage de l'extrémité libre du bras de pivotement (12) un volant de manoeuvre (17) exerçant à cette extrémité libre un effort de poussée ou de traction suivant le sens de rotation du volant (17) pour pivoter le support de roue (9) à une position angulaire déterminée de référence de la roue (8) lorsque le moyen de blocage (14) est libéré.

5. Dispositif selon la revendication 4, **caractérisé en ce que** la barre précitée (10) est bloquée au châssis (5) en ulilisant une vis (14) comme moyen de blocage traversant un trou oblong (13) réalisé le long d'une partie d'extrémité de cette barre et l'autre barre (11) comprend une partie filetée (16) montée à rotation relativement au châssis (5) en ayant son extrémité libre solidaire du volant de manoeuvre (17) et sa partie d'extrémité opposée engagée dans un perçage taraudé de la partie restante (18) de la barre (11) .

6. Dispositif selon la revendication 5, **caractérisé en ce que** chaque instrument de métrologie (19) du châssis (5) est un capteur à palpeur en contact avec le bras de pivotement correspondant (12) de la roue du châssis, ou avec l'une des deux barres parallèles (10, 11) de commande du bras de pivotement (12).

7. Dispositif selon l'une des revendications précédentes, **caractérisé en ce qu'**il comprend en outre au moins une plaque (23) montée sur le châssis (5) en étant manoeuvrable manuellement de manière à être déplacée à une hauteur déterminée relativement au châssis (5) correspondant à la position d'un berceau de véhicule à contrôler par le banc (1) et **en ce qu'**au moins l'un des instruments de métrologie (19) du châssis (5) permet de mesurer une valeur de position déterminée de référence d'un emplacement caractéristique de la plaque (23) reproduisant le berceau et qui est comparée dans le circuit électronique à une valeur mesurée par l'instrument de mesure (3) du banc (1) de la position de cette plaque (23) au même emplacement caractéristique de mesure de l'instrument de métrologie (3) du châssis (5).

8. Dispositif selon la revendication 7, **caractérisé en ce que** la plaque (23) est déplaçable, en étant guidée relativement au châssis (5), par une vis (24) montée à rotation sur le châssis (5) perpendiculairement à ce dernier et manoeuvrable par un volant (25) solidaire de la partie supérieure de la vis (24).

9. Dispositif selon l'une des revendications précédentes, **caractérisé en ce que** les roues (8) du châssis (5) sont montées à rotation sur leurs supports respectifs (9) par des roulements sans jeu et l'axe de pivotement vertical (YY') de chaque roue est également monté sur le châssis (5) par des roulements sans jeu.

10. Dispositif selon l'une des revendications précédentes, **caractérisé en ce que** les roues (8) sont montées articulées au châssis (5) par des liaisons permettant de reproduire les différents angles de pince, d'ouverture, de carrossage et de contre-carrossage que peuvent prendre les roues d'un train de véhicule.

11. Dispositif selon l'une des revendications 2 à 10, **caractérisé en ce que** la jante (20) est usinée avec le pneumatique de la roue (8) monté sur la jante (20).

## Claims

1. Device for checking a test bench (1) designed to measure, adjust and/or check a set of motor vehicle running gear, **characterized in that** it comprises a rigid chassis (5) essentially consisting of two chassis frame side rails (6) and of cross members (7) secured to the chassis frame side rails (6) and equipped with front and rear wheels (8) each able to pivot about an axis (YY') perpendicular to the chassis (5) via connecting means that can be manoeuvred by hand into a set angular position, metrology instruments (19) fixed to the rigid chassis (5) at set locations so as to measure a set reference angular position of each wheel (8) of the chassis (5), the assembly consisting of the chassis (5) and of the wheels being mounted on the test bench (1) which comprises at least one measurement instrument (3) for measuring the angular position of a wheel (8) of the chassis (5), and **in that** it comprises an electronic circuit able to compare a value of a set reference angular position of a wheel (8) which has been measured beforehand by at least one of the metrology instruments (19) against the value of the angular position of this wheel (8) measured by the measurement instrument (3) of the test bench (1) so as to determine the measurement accuracy of each measurement instrument (3) of the test bench (1).

2. Device according to Claim 1, **characterized in that** each wheel (8) of the chassis (3) is mounted on a wheel rim (20) the annular lateral flange (21) of which is surface-ground by machining on its exterior face and acts as a sighting surface for the measurement instrument (3) of the test bench (1).

3. Device according to Claim 1 or 2, **characterized in that** each wheel (8) of the chassis (5) is mounted on a wheel rim (20) bored out at its centre so as to exhibit an end wall (22) that has been surface ground by machining to act as a sighting surface for the measurement instrument (3) of the test bench (1).

4. Device according to any one of the preceding claims, **characterized in that** the connecting means that allow each wheel (8) of the chassis (5) to pivot comprise two bars (10, 11) which are substantially parallel and transverse to a corresponding one of the side rails (6) of the chassis (5) and a pivoting arm (12) of the support (9) of the wheel (8), the two bars (10, 11) having their ends situated on one and the same side connected in an articulated manner to the pivoting arm (12) at two separate locations, one (10) of the bars having its opposite end to the one articulated to the pivoting arm (12) able to be fixed to the chassis (5) by a releasable locking means (14) during the operation of adjusting the pivoting of the wheel (8) to a set value and the other bar (11) comprising, at its opposite end to the one articulated near the free end of the pivoting arm (12), a handwheel (17) which, depending on the direction in which the handwheel (17) is turned, applies a pushing or pulling force to this free end in order to pivot the wheel support (9) into a set reference angular position of the wheel (8) when the locking means (14) is released.

5. Device according to Claim 4, **characterized in that** the aforementioned bar (10) is locked to the chassis (5) using a screw (14) by way of a locking means, this passing through an oblong hole (13) made along an end part of this bar, and the other bar (11) comprises a threaded part (16) mounted such that it can turn relative to the chassis (5), having its free end secured to the handwheel (17) and its opposite end part engaged in a tapped hole in the remaining part (18) of the bar (11).

6. Device according to Claim 5, **characterized in that** each metrology instrument (19) of the chassis (5) is a sensor with a feeler in contact with the corresponding pivoting arm (12) of the wheel of the chassis or with one of the two parallel bars (10, 11) that control the pivoting arm (12).

7. Device according to one of the preceding claims, **characterized in that** it further comprises at least one plate (23) mounted on the chassis (5) with the possibility of being manoeuvred by hand so as to be moved to a set height in relation to the chassis (5) that corresponds to the position of a cradle of a vehicle that is to be checked by the test bench (1), and **in that** at least one of the metrology instruments (19) of the chassis (5) can be used to measure a value of a set reference position of a characteristic point on the plate (23) taking the part of the cradle, which value is compared in the electronic circuit against a value, measured by the measurement instrument (3) of the test bench (1), of the position of this plate (23) at the same characteristic measurement point of the metrology instrument (3) of the chassis (5).

8. Device according to Claim 7, **characterized in that** the plate (23) can be moved, guided relative to the chassis (5), by a screw (24) mounted so that it can turn on the chassis (5) perpendicular to the latter and which can be manoeuvred using a handwheel (25) secured to the upper part of the screw (24).

9. Device according to one of the preceding claims, **characterized in that** the wheels (8) of the chassis (5) are mounted such that they can rotate on their respective supports (9) via play-free rolling bearings and the vertical axis of pivoting (YY') of each wheel is also mounted on the chassis (5) via play-free rolling bearings.

10. Device according to one of the preceding claims, **characterized in that** the wheels (8) are mounted articulated to the chassis (5) by connections that make it possible to reproduce the various toe-in, toe-out, positive camber and negative camber angles that the wheels of a set of vehicle running ear can adopt.

11. Device according to one of Claims 2 to 10, **characterized in that** the wheel rim (20) is machined with the tyre of the wheel (8) already mounted on the wheel rim (20).

## Patentansprüche

1. Vorrichtung, mit der eine Bank (1) gesteuert werden kann, die dazu vorgesehen ist, ein Fahrgestell eines Kraftfahrzeugs zu vermessen, einzustellen und/oder zu überprüfen, **dadurch gekennzeichnet, dass** sie einen starren Rahmen (5) enthält, der im Wesentlichen aus zwei Längsträgern (6) und aus Querträgern (7) gebildet ist, die mit den Längsträgern (6) fest verbunden sind, und mit vorderen und hinteren Rädern (8) ausgerüstet ist, wovon jedes um eine Achse (YY') senkrecht zum Rahmen (5) über Verbindungsmittel, die manuell in eine bestimmte Winkelposition betätigbar sind, einschlagen kann, und Messinstrumente (19) enthält, die am starren Rahmen (5) an bestimmten Orten befestigt sind, um eine bestimmte Referenzwinkelposition jedes Rades (8) des Rahmens (5) zu messen, wobei die durch den Rahmen (5) und die Räder gebildete Gesamtheit, die an der Bank (1) montiert ist, wenigstens ein Messinstrument (3) für die Winkelposition eines Rades (8) des Rahmens (5) enthält, und dass sie eine elektronische Schaltung enthält, die einen bestimmten Referenzwinkelpositionswert eines Rades (8), der im Voraus durch wenigstens eines der Messinstrumente (19) gemessen worden ist, mit dem Winkelpositionswert dieses Rades (8), der durch das Messinstrument (3) der Bank (1) gemessen wird, vergleichen kann, um die Messgenauigkeit jedes Messinstruments (3) der Bank (1) zu bewerten.

2. Vorrichtung nach Anspruch 1, **dadurch gekennzeichnet, dass** jedes Rad (8) des Rahmens (5) an einer Felge (20) montiert ist, deren ringförmiger seitlicher Rand (21) durch Bearbeitung an seiner äußeren Oberfläche zugerichtet ist und als Verschraubungsstelle für das Messinstrument (3) der Bank (1) dient.

3. Vorrichtung nach Anspruch 1 oder 2, **dadurch gekennzeichnet, dass** jedes Rad (8) des Rahmens (5) an einer Felge (20) montiert ist, die in ihrer Mitte ein Loch aufweist, derart, dass sie eine Bodenwand (22) besitzt, die durch Bearbeiten zugerichtet ist und als Verschraubungsort für das Messinstrument (3) der Bank (1) dient.

4. Vorrichtung nach einem der vorhergehenden Ansprüche, **dadurch gekennzeichnet, dass** die Verbindungsmittel, die das Einschlagen jedes Rades (8) des Rahmens (5) ermöglichen, zwei Stäbe (10, 11) aufweisen, die im Wesentlichen parallel sind und zu einem Entsprechenden der Längsträger (6) des Rahmens (5) quer verlaufen, und einen Schwenkarm (12) für den Träger (9) des Rades (8) aufweisen, wobei die auf derselben Seite vorhandenen Enden der zwei Stäbe (10, 11) an zwei verschiedenen Stellen schwenkbar mit dem Schwenkarm (12) verbunden sind, wobei einer (10) der Stäbe, dessen Ende sich gegenüber jenem befindet, das an dem Schwenkarm (12) angelenkt ist, am Rahmen (5) durch ein Blockiermittel (14) befestigt werden kann, das während des Einstellvorgangs des Einschlagens des Rades (8) auf einen bestimmten Wert freigebbar ist, und der andere Stab (11) an seinem Ende gegenüber jenem, das in der Umgebung des freien Endes des Schwenkarms (12) angelenkt ist, ein Betätigungsstellrad (17) aufweist, das auf dieses freie Ende eine Schub- oder Zugkraft in Drehrichtung des Stellrades (17) ausübt, um dem Träger des Rades (9) in eine bestimmte Referenzwinkelposition des Rades (8) einzuschlagen, wenn das Blockiermittel (14) freigegeben ist.

5. Vorrichtung nach Anspruch 4, **dadurch gekennzeichnet, dass** der oben genannte Stab (10) am Rahmen (5) unter Verwendung einer Schraube (14) als Blockiermittel, die durch ein Langloch (13) verläuft, das längs eines Endabschnitts dieses Stabs verwirklicht ist, blockiert ist und dass der andere Stab (11) einen Gewindeabschnitt (16) aufweist, der relativ zum Rahmen (5) drehbar montiert ist und mit seinem freien Ende mit dem Betätigungsstellrad (17) fest verbunden ist und mit seinem gegenüberliegenden Ende in einer Gewindebohrung des verbleibenden Teils (18) des Stabs (11) in Eingriff ist.

6. Vorrichtung nach Anspruch 5, **dadurch gekennzeichnet, dass** jedes Messinstrument (19) des Rahmens (5) ein Tastsensor in Kontakt mit dem entsprechenden Einschlagarm (12) des Rades des Rahmens oder mit einem der zwei parallelen Stäbe (10, 11) für die Steuerung des Schwenkarms (12) ist.

7. Vorrichtung nach einem der vorhergehenden Ansprüche, **dadurch gekennzeichnet, dass** sie außerdem wenigstens eine Platte (23) aufweist, die am Rahmen (5) montiert ist und in der Weise manuell betätigbar ist, dass sie auf eine bestimmten Höhe relativ zu dem Rahmen (5), die der Position der Wiege des durch die Bank (1) zu überprüfenden Fahrzeugs entspricht, verlagert wird, und dass wenigstens eines der Messinstrumente (19) des Rahmens (5) ermöglicht, einen bestimmten Referenzpositionswert einer charakteristischen Stelle der Platte (23) zu messen, der die Wiege reproduziert und der in der elektronischen Schaltung mit einem durch das Messinstrument (3) der Bank (1) gemessenen Wert der Position dieser Platte (23) an derselben charakteristischen Messstelle des Messinstruments (3) des Rahmens (5) verglichen wird.

8. Vorrichtung nach Anspruch 7, **dadurch gekennzeichnet, dass** die Platte (23) verlagerbar ist, indem sie relativ zum Rahmen (5) durch eine Schraube (24) geführt wird, die am Rahmen (5) senkrecht zu diesem Letzteren drehbar montiert ist und durch ein Stellrad (25) betätigbar ist, das mit dem oberen Teil der Schraube (24) fest verbunden ist.

9. Vorrichtung nach einem der vorhergehenden Ansprüche, **dadurch gekennzeichnet, dass** die Räder (8) des Rahmens (5) an ihren jeweiligen Trägern (9) durch spielfreie Lager drehbar montiert sind und die vertikale Schwenkachse (YY') jedes Rades am Rahmen (5) ebenfalls durch spielfreie Lager montiert ist.

10. Vorrichtung nach einem der vorhergehenden Ansprüche, **dadurch gekennzeichnet, dass** die Räder (8) am Rahmen (5) durch Verbindungen gelenkig montiert sind, die die verschiedenen Winkel der Spur, der Öffnung, des Sturzes und des Gegensturzes, die die Räder eines Fahrzeugfahrgestells annehmen können, reproduzieren können.

11. Vorrichtung nach einem der Ansprüche 2 bis 10, **dadurch gekennzeichnet, dass** die Felge (20) mit dem Luftreifen des Rades (8), der an der Felge (20) montiert ist, bearbeitet wird.
